(19) Europäisches Patentamt
European Patent Office
Office européen des brevets

(11) Publication number: **0 510 591 A2**

(12) # EUROPEAN PATENT APPLICATION

(21) Application number: **92106825.0**

(22) Date of filing: **22.04.92**

(51) Int. Cl.5: **C08L 67/02**, C08L 77/06, C08K 3/16, C08K 5/09, A61B 5/14, //(C08L67/02,77:06)

(30) Priority: **23.04.91 US 690139**

(43) Date of publication of application: **28.10.92 Bulletin 92/44**

(84) Designated Contracting States: **DE FR IT**

(71) Applicant: **Becton Dickinson and Company**
**One Becton Drive**
**Franklin Lakes New Jersey 07417-1880(US)**

(72) Inventor: **Grippi, Nicholas A.**
**51 East Oak Street**
**Ramsey, New Jersey 07446(US)**
Inventor: **Tollefson, Norris M.**
**101 2c Marbury Court**
**Cary, North Carolina 27513(US)**
Inventor: **Williams, Joel L.**
**1306 Walnut Street**
**Cary, North Carolina 27511(US)**

(74) Representative: **von Kreisler, Alek, Dipl.-Chem. et al**
**Patentanwälte Von Kreisler-Selting-Werner,**
**Deichmannhaus am Hauptbahnhof**
**W-5000 Köln 1(DE)**

(54) **Polymer compositions and their blends.**

(57) The present invention is polymer compositions and their blends. The polymer blends comprise polyethylene naphthalate, an oxidizable resin and an oxidation catalyst. The polymer compositions and their blends are useful for providing an effective barrier against gas permeability in containers and for extending shelf-life of containers, especially evacuated blood collection devices.

EP 0 510 591 A2

## BACKGROUND OF THE INVENTION

### 1. Field of the Invention

This invention relates to polymer compositions and their blends for providing an effective barrier against gas permeability for containers and for extending shelf-life of containers, especially evacuated blood collection devices.

### 2. Description of the Related Art

Containers, whether rigid, semi-rigid, flexible, lidded or collapsible, or a combination of these, serve not merely to contain the material being handled, but to prevent ingress of undesirable substances from the environment. Oxygen from the atmosphere has long been regarded as one of the most reactive substances to the materials out of which containers are made.

Containers made exclusively of glass or metal have a good barrier both to egress of all substances from the container and to ingress of all substances from the environment. In most instances, gas permeation through a container made from glass or metal is negligible.

Containers made of polymers in whole or in part generally do not have the superior shelf life or permeability barrier properties that containers made of glass or metal do. These deficiencies have restricted the use of polymers in containers, despite the great advantages of polymers. These advantages include mechanical, thermal and optical properties and the adaptability of fabrication techniques for polymers, allowing the containers to be homogeneous, laminated and or coated. A further advantage of containers made from polymers is that they are generally light weight, less breakable and inexpensive to manufacture. Injection molding and extrusion, both possible methods for making articles from plastic, are inexpensive. With injection molding, large cavitation and decreased production times can increase production volume. Additionally, the injection molding process is not labor intensive and can be easily automated.

In the field of packaging materials, new polymers have been developed and used in recent years. In particular, polyethylene terephthalate (PET) has been used in the fabrication of bottles. Bottles manufactured with PET exhibit excellent mechanical properties. Such bottles are used in the packaging of pressurized liquids, such as carbonated beverages. However, such bottles are deficient when used for storing and transporting oxygen sensitive liquids. It has been found that containers made with PET are not sufficiently gas impervious and therefore do not maintain a desirable shelf-life. See, for example, U.S. Patent No. 3,733,309.

It is also known in the art that polymers such as PET can be laminated to an olefin/vinyl alcohol copolymer (EVOH) to improve the gas barrier permeable properties of the polymer. Blends of PET and EVOH have been found to be useful in making containers having improved barriers to gas permeability. See, for example, U.S. Patent Nos. 3,595,740.

Other patents of interest in the field of barrier properties are U.S. Patent Nos. 4,261,473; 4,284,671 and Japanese Patent Publication No. 2-167141.

Most polymer materials, such as PET, must be processed at relatively high temperatures, such as 290°C or greater. Below such high temperatures PET does not have sufficient viscosity to be used successfully in processes for production of containers. Such processes include extrusion blow-molding processes.

Another polymer material, polyethylene naphthalate (PEN), is useful for producing monolayer biaxially oriented containers having good barrier properties. PEN polymers have a higher melting point and higher glass transition temperatures than PET polymers. PEN polymers are also useful in a variety of packaging applications. For example, PEN polymers are readily extruded into films or melt blown into containers which have good clarity and better barrier properties with regard to oxygen and carbon dioxide.

Numerous attempts have been made to produce a polymer blend useful in commercial applications such as found in U.S. Patent No. 4,835,214 to Shepherd, et. al. which discloses blends of PEN with EVOH to form a physical barrier and provide improved resistance to oxygen permeability. A blend of PEN and EVOH provides a tortuous path that the gas permeate molecules such as oxygen, must travel through. However, the tortuous path does not completely stop the travel of gas permeate molecules. Such physical barrier polymers often show reduced performance at high temperatures or humidity and require relatively complex multilayer processing technology.

U.S. Patent No. 4,261,473 to Yamada, et. al. also discloses blends of EVOH with a number of polyesters and nylons so as to produce containers with improved physical barrier properties as compared to unblended PET polymers.

However, chemical barrier polymers are capable of chemically reacting with gas permeate molecules within a container wall. The chemical barrier polymers form a barrier and prevent the gas permeate molecules from reaching the product in the container.

Chemical barrier polymers are typically used in specific scavenging systems. In oxygen-scavenging systems oxygen molecules react chemically with a barrier polymer so as to reduce the transmission of oxygen molecules through an article wall.

Oxygen-scavenging is described in U.S. Patent No. 3,856,514 wherein antitoxidants and hard polyvinyl chloride are used in an oxygen-scavenging system. The combination of antitoxidants and polyvinyl chloride provides a chemical barrier which chemically reacts with permeating oxygen molecules. U.S. Patent No. 4,048,361 also describes oxygen-scavenging and discloses a multilayer structure in which a barrier layer such as an acrylonitrile copolymer is adhered to a layer comprising an antitoxidant. The antitoxidant layer may absorb and bind permeating oxygen molecules.

Thus, with the increased emphasis on the use of plastic medical products, a special need exists for improved polymer compositions and their blends, that will form an effective chemical barrier rather than a physical barrier to gas permeate molecules. Permeating gas molecules would be prevented substantially from completing their travel path because they would chemically react with the contents of the barrier, and be trapped in the barrier.

Such medical products that would derive a great benefit from improved plastics such as polymer compositions and their blends that form an effective chemical barrier include, but are not limited to, collection tubes and particularly those used for blood collection. A collection tube made from plastic material would have good mechanical, thermal and optical properties such as light weight, inexpensive to manufacture, and homogeneous in appearance.

Blood collection tubes require certain performance standards to be acceptable for use in medical applications. Such performance standards include the ability to maintain greater than 90% original draw volume over a one year period, to be radiation sterilizable and to be noninterfering in tests and analysis.

The most critical performance standard of the blood collection tube is the draw volume retention. Draw volume retention depends on the existence of a partial vacuum, or reduced pressure, inside the tube. The draw volume changes in direct proportion to the change in vacuum (reduced pressure). Therefore, draw volume retention is dependent on good vacuum retention.

For example, it is important to maintain the vacuum over a period of time in order to provide appropriate storage life for those tubes prior to their being used. That is, it is important for the vacuum level to be maintained for a period of time prior to the time when a technician or a nurse uses the tube for collecting a blood sample.

Radiation sterilizable means that after the tube is exposed to certain levels of radiation in the sterilization process, there is substantially no change in optical or mechanical and functional properties.

Noninterference in performance of a tube's specifications means that the materials of the tube, such as glass or plastic materials do not interfere with testing and analysis that is typically performed on blood in the tube. Such tests include but are not limited to hematology, blood chemistry, blood typing, toxicology analysis and therapeutic drug monitoring.

Therefore, it is desirable to be able to provide an evacuated blood collection tube made from a polymer blend that would be able to meet certain performance standards and be effective and usable in medical applications.

## SUMMARY OF THE INVENTION

The present invention is directed to polymer compositions and their blends. Such polymer compositions and their blends provide an effective barrier against oxygen permeability for plastic containers and extends the shelf-life of plastic containers, especially plastic evacuated blood collection devices.

Desirable polymer compositions useful in providing an effective barrier against gas permeability in articles include but are not limited to, polymeric substrate resins such as polypropylene, polystyrene, polyester, polyethylene terephthalate (PET), polyethylene naphthalate (PEN) and mixtures thereof.

The polymer blend composition useful in providing an effective barrier against gas permeability in articles desirably comprises:

(a) a polymeric substrate resin;
(b) an oxidizable resin; and
(c) an oxidation catalyst.

The polymer blend composition useful in providing an effective barrier against gas permeability in articles preferably comprises:

(a) a polyester substrate resin;
(b) a polyamide resin; and
(c) a catalyst.

A most preferred polymer blend composition useful in providing an effective barrier against gas permeability in articles comprises:

(a) PEN;
(b) nylon; and
(c) a cobalt catalyst.

Another aspect of the invention is a method of forming articles with polymer compositions comprising:

(a) forming in a first forming step a polymer composition comprising at least one polymeric substrate resin; and
(b) forming in a second forming step an article from the polymer composition in the first forming step.

A further aspect of the invention is a method for forming articles with a polymer blend composition comprising:

(a) forming in a first forming step a blend of a polymeric substrate resin and an oxidizable resin;
(b) carrying out a first forming step in the presence of a catalyst for oxidizing the oxidizable resin; and
(c) forming in a second forming step an article from the blend obtained in the first forming step.

Articles made with the polymer compositions or polymer blend compositions of the present invention include, but are not limited to, containers, jars, bottles, collection tubes, medical devices and the like.

Some advantages of articles made with the polymer compositions or polymer blend compositions of the present invention include improved gas barrier properties without sacrificing physical properties of the articles, longer shelf-life and improved toughness and light weight. Improved gas barrier properties include egress and ingress of gaseous molecules such as oxygen. In addition, the articles made with the present compositions result in a transparent to pearlescent coloring.

Another advantage of the polymer compositions or polymer blend compositions is their use in making containers and devices for medical applications where sensitivity to permeating gases and shelf-life may be critical.

An advantage of manufacturing with the polymer compositions or polymer blend compositions is that injection molding and extrusion which are inexpensive methods of manufacturing, may be employed. Therefore, the polymer compositions and blends thereof provide cost saving manufacturing means to produce articles.

A further advantage of the polymer compositions or polymer blend compositions is their use in making collection tubes. Tubes made with the polymer compositions or polymer blend compositions are able to maintain far better vacuum retention and draw volume retention than previous tubes comprised of polymer compositions and blends thereof. In addition, the tube's resistance to impact is much better than that of glass.

A further desirable feature of a blood collection tube made with the polymer compositions or polymer blend compositions of this invention is the ability to comply with the performance standards required for use in medical applications. Such performance standards include the ability to maintain greater than 90% original draw volume over a one year period, to be radiation sterilizable and to be noninterfering in testing and analysis of blood.

With the foregoing and additional features in view, this invention will now be described in more detail, and other benefits and advantages thereof will be apparent from the following description, the accompanying drawings, and the appended claims.

## DESCRIPTION OF THE DRAWINGS

A further understanding of the invention may be achieved by referring to the accompanying drawings wherein:

FIG. 1 is a diagram of the percent loss in vacuum over a period of time of a typical blood collection tube made with a PEN blend composition of the present invention as compared to typical blood collection tubes made with compositions of PET and PEN.

FIG. 2 is a perspective view of a typical blood collection tube.

FIG. 3 is a longitudinal sectional view of the tube of FIG. 2 taken along line 3-3 thereof.

## DETAILED DESCRIPTION

The present invention may be embodied in other specific forms and is not limited to any specific

embodiments described in detail which are merely exemplary. Various other modifications will be apparent to and readily made by those skilled in the art without departing from the scope and spirit of the invention. The scope of the invention will be measured by the appended claims and their equivalents.

The polymer blend composition of the present invention useful in providing an effective barrier to oxygen permeability in articles preferably comprises:

(a) polyethylene naphthalate (PEN);
(b) an oxidizable resin; and
(c) an oxidation catalyst.

PEN is a substrate resin having a high melting point, high glass transition temperature and good barrier properties. PEN includes, but is not limited to, polyethylene naphthalene 2,6-dicarboxylate, polyethylene naphthalene 1,4-dicarboxylate, polyethylene naphthalene 1,6-dicarboxylate, polyethylene naphthalene 1,8-dicarboxylate and polyethylene naphthalene 2,3-dicarboxylate. Preferably, PEN is polyethylene naphthalene 2,6-dicarboxylate.

Useful oxidizable resins for the polymer blend composition include, but are not limited to aromatic polyamide resins containing a benzene ring with at least one hydrogen in the meta position aliphatic side chain:

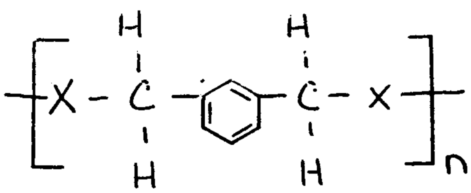

wherein X = urea, urethane or amide.

A desirable polyamide resin in the polymer blend composition includes but is not limited to a selected nylon. A preferred nylon is a polymer of metaxylylenediamine with adipic acid. Most preferably the nylon is Nylon MXD6, sold by Mitsubishi Gas Chemical Company of Hiratsuka, Japan. Nylon MXD6 contains meta-xylylene groups and has gas barrier properties against oxygen and carbon dioxide.

Useful oxidation catalysts in the polymer blend composition include, but are not limited to, catalysts that are salts of transitional metals. Desirable catalysts, include but are not limited to cobalt salts, cobalt II bromide and cobalt carboxylates. A preferred catalyst is a cobalt carboxylate which is a colorless solvent based system. Cobalt carboxylate is available as cobalt SICCATOL® (trademark of Akzo Chemie Nederland B.V., Amersford, Netherlands). A cobalt carboxylate is a solution of $C_8$-$C_{10}$ cobalt carboxylates and the concentration of cobalt (as metal) is 10% by weight relative to the solution.

Polymer blend compositions that are useful in providing an effective barrier to oxygen permeability in articles include the following components and their percentages which are the weight fractions relative to the total composition:

a PEN polymer from about 90% to about 99.5%, desirably from about 96% to about 99.5%, preferably from about 97% to about 99.5% and most preferred at about 99.5%;

an oxidizable resin from about 10% to about 0.5%, 4% to about 0.5%, preferably from about 3% to about 0.5% and most preferred at about 0.5%; and

an oxidation catalyst from about 5 to about 500 ppm, desirably from about 100 to about 250 ppm, preferably from about 150 to about 200 ppm, and most preferred at about 180 ppm.

PEN most preferably should have an inherent viscosity of at least about .04 dl/gm to about 1.1 dl/gm prior to blending and molding to obtain an article having good toughness properties and good resistance to impact loading.

The polymer blend composition of the present invention improves the barrier properties of PEN due to the property of the oxidizing catalyst in relation to the oxidizable resin. A chemical reaction is caused between permeating oxygen molecules and the oxidizable resin by the oxidizing catalyst. The permeating oxygen gas molecules are consumed and fixed to the polymer chain of the oxidizable resin by this reaction. Therefore the polymer blend composition of the present invention provides an effective barrier to permeating oxygen gas molecules.

In an even more preferred embodiment of the invention, the polymer blend composition useful in providing an effective barrier to oxygen permeability in articles, comprises:

(a) polyethylene naphthalene 2,6-dicarboxylate;
(b) nylon; and

(c) a cobalt catalyst.

Alternate embodiments of the invention include polymer compositions comprising a polymeric substrate resin such as, but not limited to polypropylene, polystyrene, polyester, PET, PEN or a mixture of PET and PEN. Blends of PET and PEN include but are not limited to 25-50% PEN blended with 50-75% PET.

A variety of articles may be made by using the polymer compositions or the polymer blend compositions of the present invention. Such articles include, but are not limited to packaging, containers, bottles, jars, tubes, medical devices and collection tubes. A preferred article made with the polymer compositions or blends thereof is an evacuated blood collection tube.

Articles made from the polymer compositions or blends thereof of the present invention have improved physical and chemical properties including, but not limited to, good toughness, light weight, extended shelf-life, good resistance to oxygen permeability and transparent to pearlescent coloring.

The polymer compositions or blends thereof may be readily formed into articles. The articles are formed by standard conversion techniques or molding procedures, including but not limited to, injection molding, extrusion, stretch blow molding, compression molding, transfer molding, vacuum molding, casting molding, injection stretch blow molding using either one or two-stage technology, pipe extrusion, coinjection or coextrusion where the polymers may serve as either the structural layer or barrier layer and the like.

The shelf-life of articles formed from the polymer compositions or blends thereof may be tailored for specific end-users, based on the blend of the components of the composition and the thickness of the article desired.

The shelf-life of a collection tube formed from a polymer blend composition comprising PEN, is believed to be from about 12 months to about 36 months, preferably from about 18 months to about 36 months and most preferred at about 36 months.

As illustrated in FIG. 1, it is believed that a typical blood collection tube made with a composition of PEN has an improved barrier against gas permeability as compared to a typical blood collection tube made with a composition of PET. It is further believed that a tube made with a polymer blend composition comprising PEN has an improved barrier against gas permeability as compared to a tube made with a composition of PEN and to a tube made with a composition of PET.

It is believed that an evacuated blood collection tube made with the polymer blend composition of the present invention is able to maintain an excellent draw volume retention for at least 24 months due to the effective chemical barrier to oxygen gas permeation through the tube wall.

An evacuated blood collection tube made with the polymer compositions or blends thereof may effectively be used in such applications as routine chemical analysis, biological inertness, hematology, blood chemistry, blood typing, toxicology analysis or therapeutic drug monitoring and other clinical tests involving body fluids.

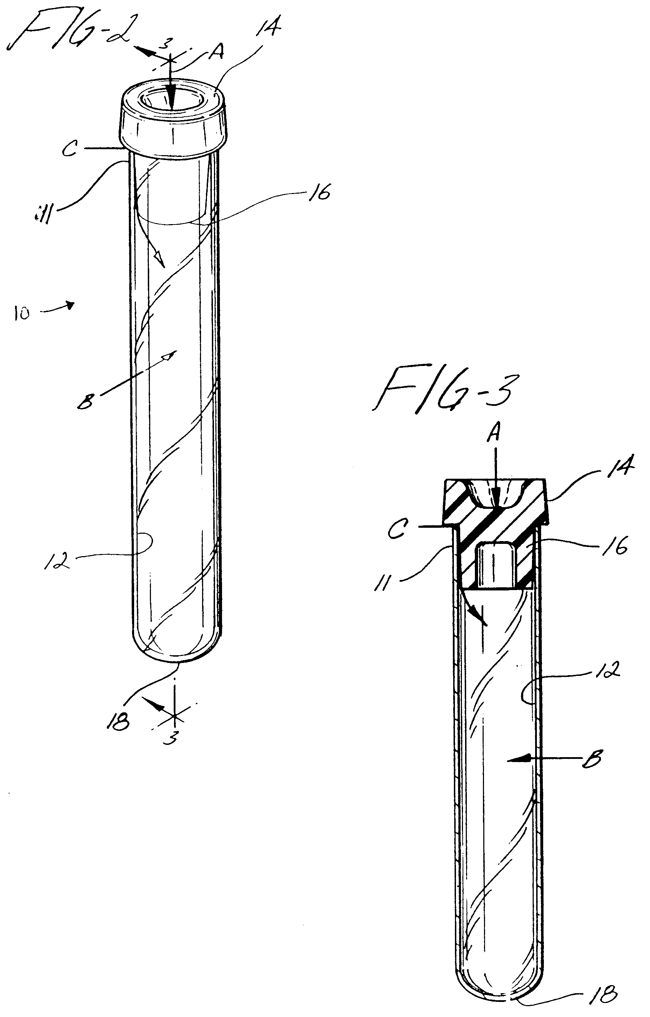

FIGS. 2 and 3 show a typical blood collection tube 10, having an open end 11, a closed end 18 and a stopper 14 which extends into and adheres to the inside walls 12 of the tube for maintaining stopper 14 in place. FIG. 3 schematically illustrates that there are three mechanisms for a change in vacuum in a blood collection tube: (A) gas permeation through the stopper material; (B) gas permeation through the tube material and (C) leak at the closure-tube interface. Therefore, when there is substantially no gas permeation and no leak, there is good vacuum retention and good draw volume retention.

The method of coating an evacuated blood collection tube with a polymer composition or a blend thereof includes, but is not limited to solution coating, dip coating, coextrusion, cross-head extrusion or coinjection molding against form laminates.

The polymer composition or a blend thereof may effectively be used to coat an article such as an evacuated blood collection tube. The coating would provide the article with an effective barrier against oxygen gas permeability.

The polymer compositions or blends thereof used in accordance with this disclosure, may contain conventional additives and ingredients which do not adversely affect the properties of articles made therefrom. Conventional additives include fillers, lubricants, light and heat stabilizers, extrusion aids, dyes, pigments stabilizers, e.g., antitoxidants or ultraviolet light screening agents, extrusion aids, additives designed to make the polymer more degradable or combustible, such as oxidation catalyst and the like.

Various other modification will be apparent to and may be readily made by those skilled in the art without departing from the scope and spirit of the invention.

The examples are not limited to any specific embodiment of the invention, but are only exemplary.

## EXAMPLE 1

**METHOD OF FORMING EVACUATED BLOOD COLLECTION TUBES WITH A POLYMER BLEND COM-**

**POSITION COMPRISING PEN**

Granules of approximately 99.5% of PEN, 0.5% of Nylon MXD6 and 180 ppm of cobalt SICCATOL are mixed and then dried to below 0.005% moisture in a dehumidifying desicant-type dryer for a minimum of 4 hours at 270°F.

The pellets are then injection molded to form blood collection tubes in 1.5 seconds in a 4-cavity hot runner mold. The manifold and gate temperature of the hot runner mold are set approximately from about 590°F to 630°F and the mold shot size is approximately 1/2 to 1/3 of the injection barrel capacity.

The blood collection tubes are then cooled in six (6) seconds with cooling water set at approximately 80°F to 115°F.

**EXAMPLE 2**

**METHOD OF FORMING EVACUATED BLOOD COLLECTION TUBES WITH A COMPOSITION OF PEN**

PEN pellets are dried to approximately below 0.005% moisture in a dehumidifying desicant-type dryer for a minimum of 4 hours at 270°F.

The pellets are then injection molded in 1.5 seconds in a 4-cavity hot runner mold to form 13 X 100 mm blood collection tubes in a 100 ton-8-ounce shot capacity Krauss Mafei Horizontal Injection molding machine. The manifold and gate temperature of the hot runner mold are set approximately from about 590°F to 630°F.

The blood collection tubes are then cooled in six (6) seconds with cooling water set at approximately 80°F to 115°F.

**EXAMPLE 3**

**COMPARATIVE ANALYSIS OF BLOOD COLLECTION TUBES MADE WITH POLYMER COMPOSITIONS AND BLENDS THEREOF**

Blood collection tubes were made from PEN and two different formulations of PET. The PET formulations were manufactured by Eastman Chemical Products, Inc., Kingsport, Tennessee.

The tubes were tested for volume loss and the predicted shelf life calculated from the volume loss results. Exponential regression analysis allowed the determination of the draw volume loss rate of the tube material as the slope using the equation:

draw volume = A * EXP(-Bt)

where:

t = time (days)
A = intercept of initial draw volume (mL)
B = slope (1/day)

The shelf-life was calculated from the slope of the draw volume studies when the period of the draw volume was within acceptable limits. The results of the studies are reported in Table 1.

Table 1

| Calculated Shelf Life for Tube Materials | | | | |
|---|---|---|---|---|
| Tube Material | Data Collection Period (days) | Rate of Draw Volume Loss (ml/day) | Predicted Shelf Life (months) | % Vacuum* Retention |
| Glass | 149 | $0.88 \times 10^{-4}$ | 78.9 | 96.8 |
| PET (A) | 150 | $5.46 \times 10^{-4}$ | 12.7 | 81.9 |
| PET (B) | 90 | $5.78 \times 10^{-4}$ | 12.0 | 81.0 |
| PEN | 90 | $2.08 \times 10^{-4}$ | 33.2 | 92.7 |

* % Vacuum Retention is predicted at the end of one year elapsed time.

Table 1 shows that a tube made from PEN has a greater predicted shelf-life than a tube made from

PET.

**Claims**

1. An article comprising a polymeric substrate resin, an oxidizable resin and an oxidation catalyst.

2. An evacuated blood collection tube comprising:
   (a) a polymeric substrate resin;
   (b) an oxidizable resin, and
   (c) an oxidation catalyst.

3. An evacuated blood collection tube comprising:
   (a) polyethylene naphthalene 2,6-dicarboxylate
   (b) polymer of metaxylylenediamine and adipic acid; and
   (c) cobalt carboxylate.

4. A polymer blend comprising:
   (a) a polymeric substrate resin;
   (b) an oxidizable resin; and
   (c) an oxidation catalyst.

5. The blend of Claim 4 wherein said polymeric substrate resin is selected from the group consisting of polypropylene, polystyrene, polyester, polyethylene terephthalate and polyethylene naphthalate.

6. The blend of Claim 5 wherein said polymeric substrate resin is polyethylene naphthalate.

7. The blend of Claim 6 wherein polyethylene naphthalate is selected from the group consisting of polyethylene naphthalene 2,6-dicarboxylate, polyethylene-naphthalenene 1,4-dicarboxylate, polyethylene naphthalene 1,6-dicarboxylate, polyethylene naphthalene 1,8-dicarboxylate and polyethylene naphthalene 2,3-dicarboxylate.

8. The blend of Claim 4 wherein the oxidizable resin is a polyamide resin.

9. The blend of Claim 4 wherein the oxidation catalyst is selected from the group consisting of salt of transitional metal, cobalt salt, cobalt II bromide and cobalt carboxylate.

10. The blend of Claim 9 wherein the catalyst is cobalt carboxylate.

FIG-1

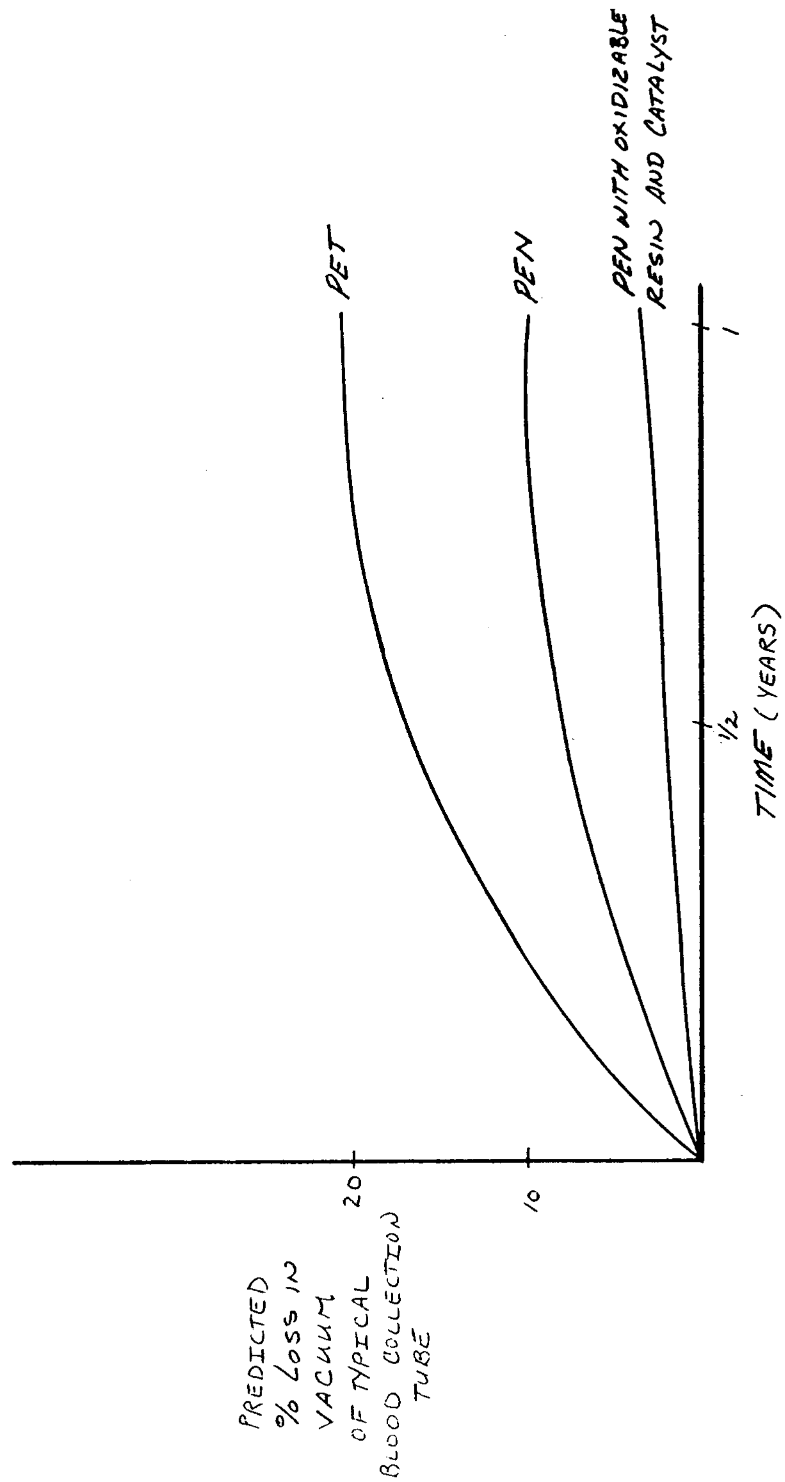
PET
PEN
PEN WITH OXIDIZABLE RESIN AND CATALYST
PREDICTED % LOSS IN VACUUM OF TYPICAL BLOOD COLLECTION TUBE
20
10
1/2
1
TIME (YEARS)

FIG-2

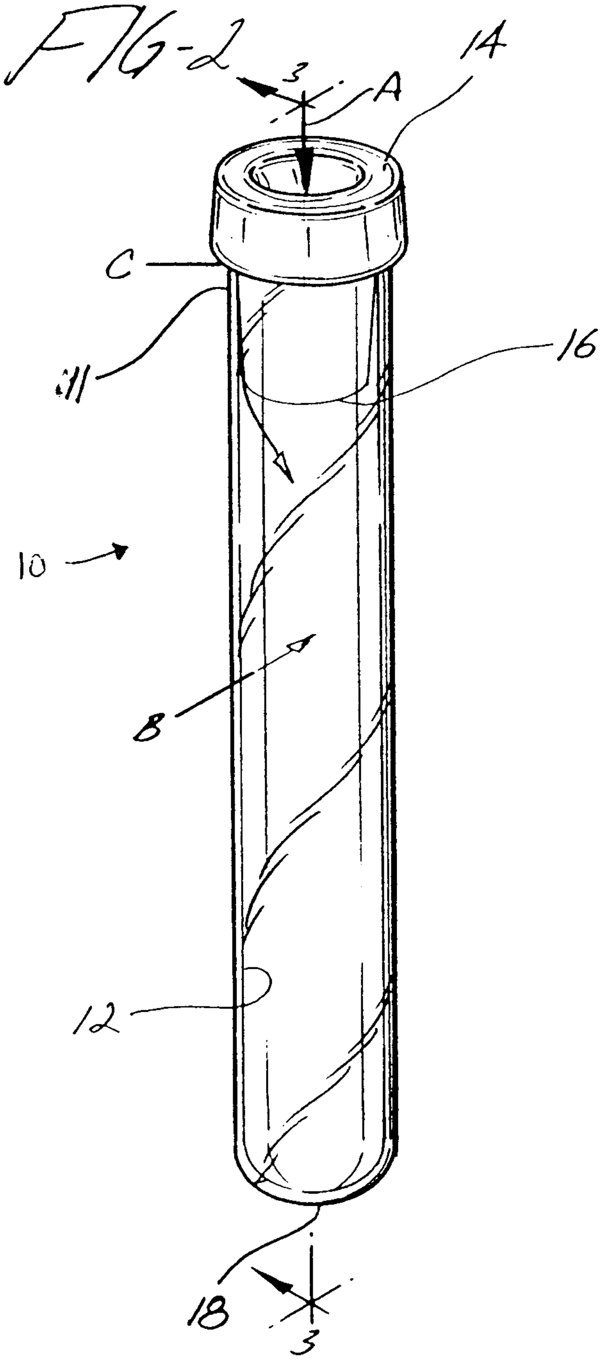


FIG-3